# EUROPEAN PATENT APPLICATION

(11) **EP 2 204 985 A2**
(43) Date of publication of application: **07.07.2010**
(21) Application number: 09252799.3
(22) Date of filing: 16.12.2009
(51) Int. Cl.: H04N 5/445, H04N 5/76, H04N 7/16

(54) **Community programmed television**

(30) Priority: 30.12.2008 US 346002
(71) Applicant: Intel Corporation, Santa Clara, CA 95052 (US)
(72) Inventor: Biesemeyer, Ralph E, Oregan 97231 (US); Feuerstraeter, Mark T, California 95746 (US)
(74) Representative: Beresford, Keith Denis Lewis

(57) **Abstract**

A community programmed television (CPT) network comprises a provider of community programmed television schedules and a plurality of community programmed television receivers. The television receivers may receive schedules from the provider and execute activities such as displaying a television program, playing a game, chatting, and shopping at times specified by the schedule.

## Description

### BACKGROUND

Television broadcast scheduling is the practice of organizing television programs in a daily, weekly, or season-long schedule. In particular, broadcast scheduling specifies what television programs the television network will broadcast and when the television network will broadcast each television program to ensure that every second of valuable airtime is used.

Modem television networks regularly change the scheduling of their programs to build an audience for a show, retain that audience, or compete with programs of other television networks. Television scheduling strategies are employed to give programs the best possible chance of attracting and retaining an audience. In particular, television scheduling strategies are used to deliver programs to audiences when the audiences are most likely to want to watch the programs and deliver audiences to advertisers in the composition that makes their advertising most likely to be effective.

Time shifting devices such as consumer Digital Video Recorders (DVRs) are becoming more prevalent. A consumer DVR allows viewers to record broadcast television programs and watch the recorded television programs at a later time that is a personally more convenient time. Recording and playing back television programs using a DVR provides near on-demand video capabilities as the viewer may view the television program at any time following the original broadcast and recording. Such time-shifting usage of DVRs may increase network efficiency as the television programs may be broadcast a single time to accommodate viewing of the program at anytime after the broadcast. However, on-demand video delivery requires multiple broadcasts, multicasts, and/or unicasts or the television program in order to deliver the television program to the viewers at times requested by the viewers.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.

FIG. 1 shows an embodiment of a community programmed television (CPT) network.

FIG. 2 shows an embodiment of a CPT server of the CPT network of FIG. 1. FIG. 3 shows an embodiment of a CPT receiver of the CPT network of FIG. 1.

FIG. 4 shows a flow diagram depicting an embodiment of a method of the CPT network of FIG. 1 for creating and delivering a CPT schedule.

FIG. 5 shows an embodiment of a user interface of the CPT receiver of FIG. 1 that permits viewing and/or altering a CPT schedule.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the invention as defined by the appended claims.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present disclosure. It will be appreciated, however, by one skilled in the art that embodiments of the disclosure may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing information in a form readable by a machine (e.g., a computing device). For example, a machine-readable medium may include read only memory (ROM); random access memory (RAM); magnetic disk storage media; optical storage media; flash memory devices; and others.

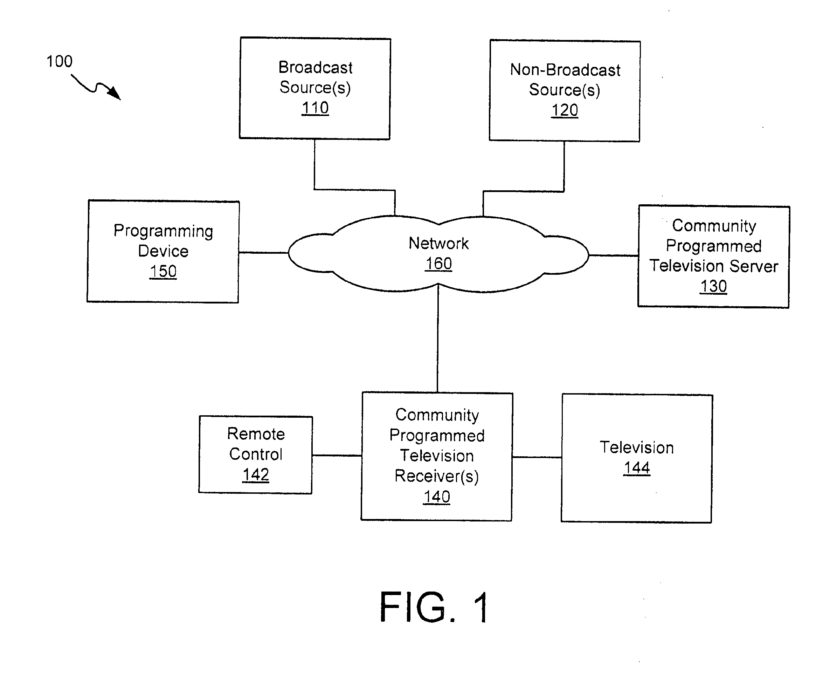

FIG. 1 shows an embodiment of a community programmed television (CPT) network 100. The CPT network 100 may define television communities and may create community programmed television (CPT) schedules which are television schedules tailored for the defined television communities. The CPT network 100 may permit viewers to select a CPT schedule from several created CPT schedules and may deliver the selected CPT schedule to the viewer.

As shown, the CPT network 100 may include broadcast sources 110, non-broadcast sources 120, and a community programmed television (CPT) server 130. The CPT network 100 may further include community programmed television (CPT) receivers 140 and programming devices 150. Furthermore, the CPT network 100 may include a network 160 to operatively couple the components 110, 120, 130, 140, 150 to one another.

The network 160 may include wireless and/or wired computer networks such as, for example, one or more IEEE 802.11 (WiFi) networks, IEEE 802.16 (WiMAX) networks, IEEE 802.20 (Mobile-Fi) networks, and IEEE 802.3 (Ethernet) as well as associated networking protocols. In one embodiment, the network 160 includes a global packet switching network such as the Internet to transfer data between one or more components 110, 120, 130, 140 and 150 of the interactive television network 100. In particular, each component 110, 120, 130, 140 and 150 in one embodiment may be coupled to the network 160 via a broadband Internet connection such as, for example, a cable television (CATV) Internet connection or a digital subscriber line (DSL).

In addition to computer networks, the network 160 may include one or more television distribution networks such as cable television (CATV) distribution network that generally broadcasts television programs to subscribers via terrestrial cables, satellite television distribution networks that broadcasts television programs to subscribers via satellites, IP-TV (Internet Protocol Television) distribution networks that broadcasts television programs to subscribers via connections to an Internet Protocol (IP) network (e.g. the Internet), and/or terrestrial television distribution networks which broadcast analog and/or digital television programs freely over the air to television receivers.

The broadcast sources 110 in one embodiment include both free-to-air (FTA) television networks such as, for example, the national television networks ABC^{™}, NBC^{™}, and CBS^{™}. The broadcast sources 110 may also include premium television networks such as the premium television networks HBO^{™}, SHOWTIME^{™}, ESPN^{™}, DISNEY^{™}. Regardless of whether a free-to-air or premium network, each broadcast television network generally creates a television schedule that specifies what television programs are to be broadcast and the times such television programs are to be broadcast. Due to the broadcast nature of such television networks, each television network generally has a single television schedule which is used to broadcast television programs to all viewers. In regard to national networks, however, regional affiliates may provide some minor regional changes to the national television schedule. For example, local affiliates of a national television network may replace television programs received from the national television network with regional sporting events or regional news casts to provide some geographical customization to the television schedule created by the national television network. However, all viewers serviced by the regional affiliate still receive the same television programs and are unable to personalize the television programs received from a particular network. Thus, in order to personalize a viewing experience comprising television programs of such broadcast networks, a viewer may manually change the channel of their television receiver in order to switch between a television program being broadcast by one television network to a television program being broadcast by another television network.

The non-broadcast sources 120 may include sources of entertainment, education, information, edutainment, and social networking sources that may be customized on a viewer basis and/or selectively distributed to viewers. For example, non-broadcast sources may include on-demand television, movie, music, or other media services that permits viewers to order audio and/or video content on demand and receive such ordered content immediately or shortly after ordering such content. The non-broadcast sources may also include Internet related services such as web sites, online gaming, chat rooms, Voice over IP (VoIP) services, media sharing activities, shopping activities, and other social networking services.

The CPT server 130 may comprise a computing device such as a server, server cluster, or another computing platform. In one embodiment, the CPT server 130 may be provided and maintained by a community programmed television (CPT) provider such as, for example, a cable television company, a satellite television company, a telephone company that distributes television programming, an IP-TV company, or another television distribution company. In another embodiment, the CPT provider for a CPT receiver 140 may comprise one or more computing devices of an entity that is separate from the television distribution company that broadcasts television programs to the CPT receiver 140.

In general, the CPT server 130 comprises computing resources to present CPT schedules to CPT receivers 140, receive requests for CPT schedules from the CPT receivers 140, and transfer the requested CPT schedules to the CPT receivers 140. In one embodiment, the CPT server 130 may comprise a web server to present and transfer the CPT schedules to the CPT receivers 140 using an transport protocol such as, for example, the HTTP (Hypertext Transport Protocol) protocol. However, other embodiments may utilize other types of servers and/or protocols to present and transfer the CPT schedules to the CPT receivers 140.

The CPT receivers 140 in general provide an interface between services of the network 160 and televisions 144 to which the CPT receivers 140 are connected. In particular, the CPT receivers 140 may receive television programs from the broadcast sources 110 and generate a television signal suitable for presentation by the television 144. To this end, the CPT receivers 140 may demodulate, decrypt, decode, store, amplify, synchronize, multiplex, demultiplex, transcode or otherwise process the received television program in order to generate a television signal suitable tor the attached television 144.

As discussed in further detail below, the CPT receiver 140 may provide an interface to the CPT server 130 in order to enable a viewer to review the CPT schedules 248 of the CPT server 130, select a CPT schedule 248, alter a received CPT schedule 248, and provide the CPT server 130 with data regarding alterations to the received schedule 248 and/or data regarding viewer status and/or actions. The CPT receiver 140 may further execute the altered or unaltered CPT schedule 248. As a result of executing the CPT schedule 248, the CPT receiver 140 may tune to specific television stations of the broadcast sources 110 at times specified by the schedule 248. Moreover, the CPT receiver 140 may initiate activities of the non-broadcast sources 120 such as view on demand, chat, online gaming, etc. at times specified by the schedule 248.

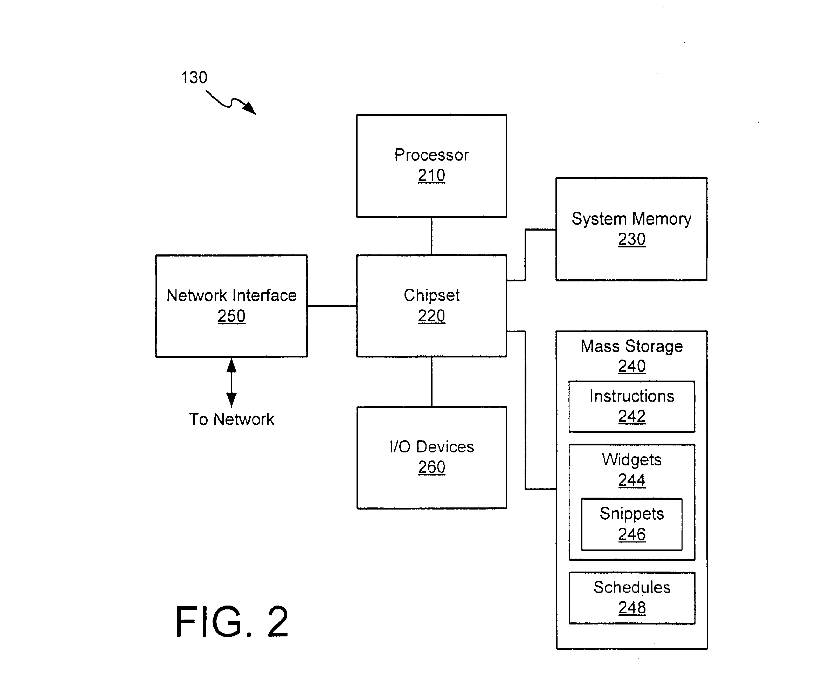

The programming device 150 generally defines CPT schedules 248. In one embodiment, the programming device 150 comprises a computing device such as a desktop computer system, a workstation, a laptop, a netbook, or other general computing device. In particular, the programming device 150 may include a processor, memory and other components which enable a programmer to access widgets 244 of the server 130, and configure such widgets 244 to define one or more schedules 248 for the CPT receivers 140. Some embodiments of the programming device 150 may be implemented in a manner similar to the embodiment of the CPT server 130 shown in the simplified block diagram of FIG. 2.

As shown in FIG. 2, the CPT server 130 may include a processor 210, a chipset 220, and system memory 230. The computing device 100 may further include a mass storage device 240, a network interface 250, and I/O devices 260. The processor 210 may comprise one or more processors from Intel Corp. or another processor manufacture such as IBM Corp. and AMD Inc. The processor 210 may include one or more processing cores to fetch and execute software and/or firmware instructions that define the operation the CPT server 130.

The chipset 220 may include controllers to control components of the CPT server 130. For example, the chipset 220 may include platform supporting hardware such as one or more Direct Memory Access (DMA) controllers, an interrupt controller, and a real time clock. The chipset 220 may also include a memory controller to provide an interface between the processor 210 and the system memory 230. In some embodiments, the memory controller or portions of the memory controller may be integrated into the processor 210. The chipset 220 may also include one or more mass storage device interface controllers such as, for example, a Parallel AT Attachment (ATA) interface controller, a Serial ATA interface controller, and/or Small Computer System Interface (SCSI) controller IDE to interface the mass storage device 240. Further, the chipset 220 may include a graphics controller, Universal Serial Bus (USB) controller, Peripheral Component Interconnection (PCI) Express controllers, audio controllers, keyboard controllers and the like in order to controller corresponding I/O devices 260 and other components of the CPT server 130.

The system memory 230 may store data and instructions to be processed and executed by the processor 210. The system memory 230 may comprise various types of volatile and/or non-volatile memory devices. For example, system memory 230 may include volatile memory devices such as Synchronous Dynamic Random Access Memory (SDRAM) devices, Dynamic Random Access Memory (DRAM) devices, RAMBUS Dynamic Random Access Memory (RDRAM) devices, and/or other volatile memory devices. Further, the system memory 230 may include non-volatile memory devices such as, for example, flash memory devices, read only memory (ROM) devices, Electrical Erasable Programmable ROM (EEPROM) devices, battery backed RAM devices, and/or other non-volatile memory devices.

The mass storage device 240 may include floppy disk drives, hard drive disks, compact disk drives, and digital versatile disk (DVD) drives to store data and/or instructions. In one embodiment, the mass storage device 240 includes instructions 242 to be executed by the processor 210 in order to provide the community programmed television (CPT) services of the CPT server 130. Furthermore, the mass storage device 240 may include a database or gallery of widgets 244 and CPT schedules 248. While depicted as stored in the mass storage device 240 of the CPT server 130, in some embodiments the CPT server 130 may retrieve the instructions 242, widgets 244 and/or schedules 248 from another computing device such as a file server, web server, and/or database server via the network 160.

The widgets 244 in one embodiment comprise applications or applets of instructions that are executed by CPT receivers 140 to display information such as time, temperature, and stock quotes. In one embodiment, a particular type of widget 244 that is used to represent periods of activity in front of the television 144 is also referred to as a snippet 246. Thus, the snippets 246 in one embodiment are a specific type of widget 244 that is used to implement a particular activity at a particular time per a schedule 248. For example, a snippet sequence may include a snippet 246 for watching a television program, a snippet 246 for playing a game, a snippet 246 for sharing Internet services (e.g. viewing a web sites), a snippet 246 for using an online forum, a snippet 246 for using VoIP (Voice over Internet Protocol) communications, a snippet 244 for using IM (instant messaging) communications, a snippet 246 for email communications, a snippet 246 for delivering a marketing message, etc. The widgets 244 may display viewer options with regard to a television activity and be created by a provider of CPT services, providers of broadcast sources 110, providers of non-broadcast sources 120, or other third party developers.

As shown, the CPT server 130 may also include a network interface 250. In one embodiment, the network interface 250 includes one or more wired Ethernet controllers which couple the community programmed server 130 to the Internet portions of the network 160. However, the network interface 250 may include other types of network interface controllers which provide a broadband connection to the network 160 and the CPT receivers 140 coupled to the network 160.

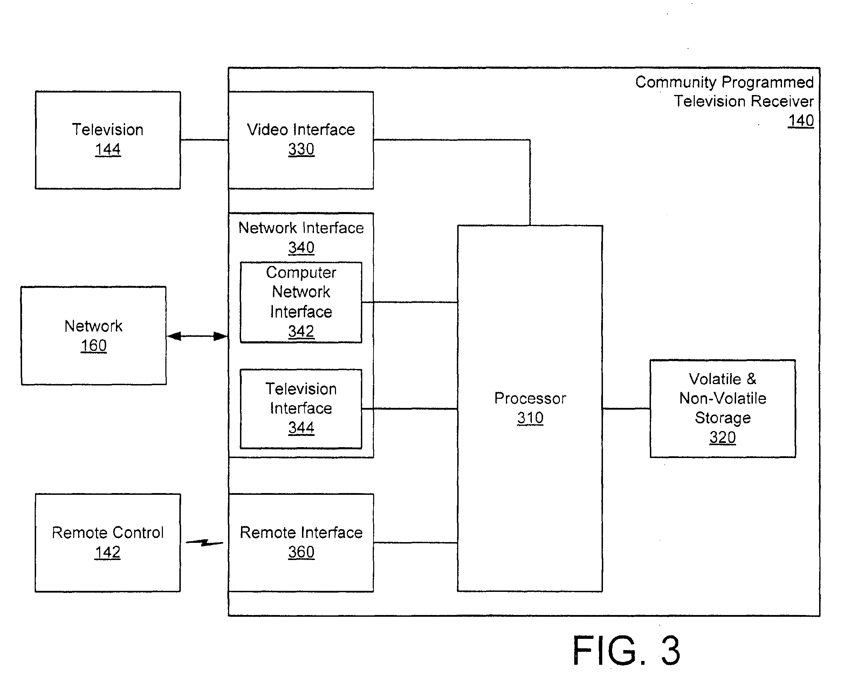

A simplified block diagram of an embodiment of a CPT receiver 140 is shown in FIG. 3. As shown in FIG. 3, the CPT receiver 140 may be implemented as a separate device such as a set-top box that operatively couples a television 144 to the network 160 and the services provided by the network 160. However, in other embodiments, the CPT receiver 140 may be integrated into the television 144. In yet other embodiments, the CPT receiver 140 and television 144 may be implemented using a computing device in a manner similar to the CPT server 130 shown in FIG. 2. In such a computing device embodiment, the CPT receiver 140 may be implemented using a desktop computer system, a laptop, a netbook, cellular telephone and/or other computing device capable of displaying television programs and accessing other services provided by the network 160.

As shown in FIG. 3, the CPT receiver 140 may include a processor 310, volatile and non-volatile storage 320, a video interface 330, a network interface 340, and a remote interface 360. In one embodiment, the processor 310 as well as one or more of the other components of the CPT receiver 140 are provided by a system on chip (SOC) device from Intel Corp. or another processor manufacturer. However, in other embodiments, the processor 310 as well as the other components may be provided by separate devices supplied by Intel Corp. and/or other chip manufacturers. In general, the processor 310 may include one or more processing cores to fetch and execute software and/or firmware instructions that define the operation the CPT receiver 140.

The volatile and/or non-volatile storage 320 may store data and instructions to be processed and executed by the processor 310. The storage 320 may comprise various types of volatile and/or non-volatile memory devices. For example, storage 230 may include volatile memory devices such as Synchronous Dynamic Random Access Memory (SDRAM) devices, Dynamic Random Access Memory (DRAM) devices, RAMBUS Dynamic Random Access Memory (RDRAM) devices, and/or other volatile memory devices. Further, the storage 240 may include non-volatile memory devices such as, for example, flash memory devices, read only memory (ROM) devices, Electrical Erasable Programmable ROM (EEPROM) devices, battery backed RAM devices, and/or other non-volatile memory devices. The volatile and/or non-volatile storage 320 may also include mass storage such as hard drive disks, compact disk drives, and digital versatile disk (DVD) drives to store data and/or instructions.

As shown, CPT server 130 may also include a network interface 340. In one embodiment, the network interface 350 includes both a computer network interface 342, and a television interface 344. The computer network interface 342 may be implemented in a manner similar to the network interface 250 of FIG. 2. Thus, the computer network interface 342 may include one or more wired Ethernet controllers which couple the CPT receiver 140 to the Internet portions of the network 160. However, the network interface 342 may include other types of computer network interface controllers which provide a broadband connection to the network 160 and the CPT server 130.

The television interface 344 generally receives television signals from broadcast sources 110. In particular, the television interface 344 may demodulate, amplify, decode, demultiplex, digitize, and/or otherwise condition the received television signals in order to obtain signals suitable for the processor 310 to process and/or the video interface 350 to display on the television 144. To this end, the television interface 344 may include a free-to-air television tuner and associated antenna to receive analog and/or digital television signals broadcast over the air. The television interface 344 may include a cable television tuner to receive television signals from a cable television company via a coaxial cable coupled to the network interface 340. The television interface 344 may include a satellite receiver to receive television signals from a satellite television company via a satellite dish coupled to the network interface 340. The television interface 344 may include an IP-TV receiver to receive television signals from an IP-TV company via a computer network coupled to the network interface 340. The television interface 344 may also include one or more television inputs such as HDMI inputs, component video inputs, composite video inputs, etc. which permit the receipt of television signals from external television sources such as cable television boxes, satellite receivers, DVD players, etc. to be coupled to the CPT receiver 140.

As shown, the CPT receiver 140 may further include a remote interface 360. The remote interface 360 may receive commands from a wireless remote control 142 and provide signals to the processor 310 representative of the received commands. In particular, the remote control 142 may include one or more buttons or switches which a viewer may press or activate. The remote control 142 may further include an infrared transmitter and/or a radio transmitter to transmit signals representative of buttons pressed or switches activated. The remote interface 360 may include an infrared receiver and/or an radio receiver to respectively receive infrared signals and/or radio signals from the remote control 140. The remote interface 360 may demodulate the received signals and provide the processor 310 with signals indicative of the buttons and/or switches activated by the viewer. Thus, the remote control 142 and remote interface 360 provide a user interface that permits a viewer to control the operation of the CPT receiver 140 and manage their plurality of television activities, from a distance.

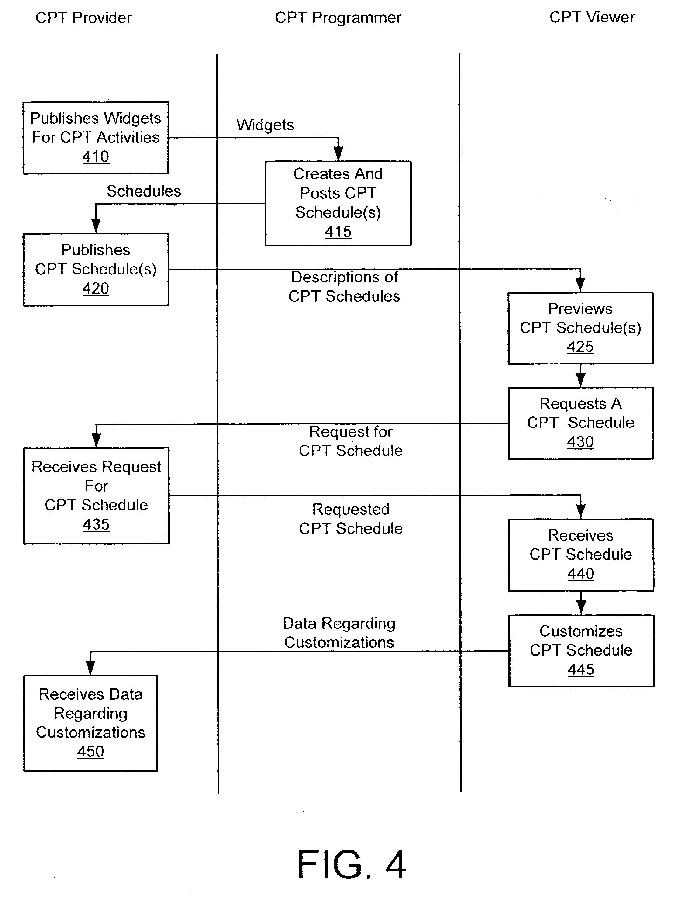

Referring now to FIG. 4, an embodiment of a method for providing community programmed television to viewers is shown. At 410, a CPT provider may publish widgets 244 to a CPT server 130. As mentioned above, the widgets 244 provide instructions for the CPT receivers 140 that when executed result in the CPT receivers 140 displaying information such as time, temperature, stock quotes or sports scores on an attached television 144. Moreover, the widgets 244 may include snippets which define periods of activity in front of the television 144 such as watching a television program, playing a game, sharing Internet services, etc.

At block 415, a programmer via a programming device 150 may access the published snippets 246 on the CPT server 130 and create a schedule 248. In particular, the programmer may select snippets 246 which correspond to activities which the programmer wants to add to the schedule 248. The programmer may further configure the selected snippets 246 by specifying a temporal order for each activity or snippet 246 of the schedule 248. For example, the programmer may specify a date, a time of day and duration for each activity or snippet 246 of the schedule 248. In another embodiment, the programmer may specify a date and a time of time for a first activity of a schedule 248 and merely specify a temporal order and duration for each of the remaining activities of the schedule 248. In one embodiment, the programming device 150 may present the schedule 248 to the programmer as a queue of snippets 246 along a timeline. The programming device 150 may further enable the programmer to drag snippets 246 to specific time slots in the queue, alter the order of the snippets 246 in the queue and the duration of the snippets 246 in the queue.

Moreover, the programming device 150 may permit the programmer to configure various aspects of the selected snippets 246. For example, the gallery of widgets 244 may include a snippet 246 to schedule a television program for viewing. Such a snippet 246 may permit a programmer to specify a date, a start time, a duration or stop time, a television channel, a description of the television program, a representative image of the television program, and possibly other information regarding the television program. In one embodiment, the programmer may further specify whether the viewer is permitted to move the activity, replace the activity, and/or skip the activity associated with the selected snippet 246. For example, if the activity corresponds to a live event (e.g. a televised football game), the programmer may specify that the activity may not be moved as the activity is tied to a specific date and time. Similarly, the programmer may specify details for snippets 246 of other selected activities such as specifying a web address of an online game, web site, or forum.

In this manner, the programmer may define communities of viewers. The schedules 248 created by the programmer may be requested and used by multiple viewers and as a result multiple CPT receivers 140. Furthermore, the programmer may limit availability of schedules 248 in order to further foster developed communities. For example, the programmer may limit a schedule 248 having chat room activity or a gaming activity to certain viewers, a certain number of viewers, etc., thus permitting the creation of communities and communal activities among persons of similar interests.

The CPT provider at 420 may receive the schedule(s) 248 from the programming device 420 and may publish the schedule(s) 248. In particular, the CPT provider may categorize received schedules 248 by areas of interest and create galleries, web pages, and/or other interfaces via which viewers may browse and/or search for schedules 248 using their CPT receivers 140. At 425, a viewer via their remote control 142 and CPT receiver 140 may browse and/or search for schedules 248. At 430, the CPT receiver 140 may send a request to the CPT server 130 for one or more selected schedules 248.

The CPT server 130 at 435 may receive the requests from a CPT receiver 140 for schedules 248 and may provide the requested schedules 248 to the requesting CPT receiver 140. In one embodiment, the CPT server 130 transfers schedules 248 to the CPT receiver 140 by transferring a widget 244 comprising configured snippets 246 that define the schedule 248 to the CPT receiver 140. In another embodiment, instead of transferring widgets 244 and snippets 246, the CPT server 130 transfers data to the CPT receiver 140 that identifies which snippets 246 make up the schedule 248 and that specifies any configuration data associated with the snippets 246. The CPT receiver at 440 receives the requested schedules 248 and may store the requested schedules 248 for later execution.

One advantage of transferring data to the CPT receiver 140 instead of the widgets 244 and snippets 246 is that the CPT receiver 140 may download identified widgets 244 and snippets 246 from parties other than the CPT provider. Transferring the configuration data instead of the widgets 244 and snippets 246 may further reduce bandwidth usage of the CPT server 130 and the CPT receiver 140 as particular widgets 244 and/or snippets 246 may be transferred to the CPT receiver 140 only when updated. For example, a gallery of stock widgets 244 and snippets 246 may be stored in the CPT receiver 140 at the time of manufacture. Data provided by the CPT server 130 may then configure the stock widgets 244 and snippets 246 per the requested schedule 248. If a stock widget 244 and/or snippet 246 is later updated or new widgets 244 and/or snippets 246 are created, then such updated and/or newly created widgets 244 and/or snippets 246 may be transferred to the CPT receiver 140 only once, thus potentially reducing bandwidth usage of the CPT server 130 and receiver 140.

At 445, the viewer may customize a received schedule 248. For example, for a particular schedule 248 of activities, the viewer may move an activity ahead in the queue of activities, move an activity back in the queue of activities, remove an activity, and/or replace an activity with another activity. In one embodiment, the CPT receiver 140 provides the CPT server 130 with data regarding changes made by the viewer to the schedule 248 at 450 as well as data regarding the order of activities in the playback queue. The CPT server 130 may collect such data anonymously and provide such data to programmers so that they may alter future schedules 248 and/or create additional schedules 248 based upon the data received from the CPT receivers 140.

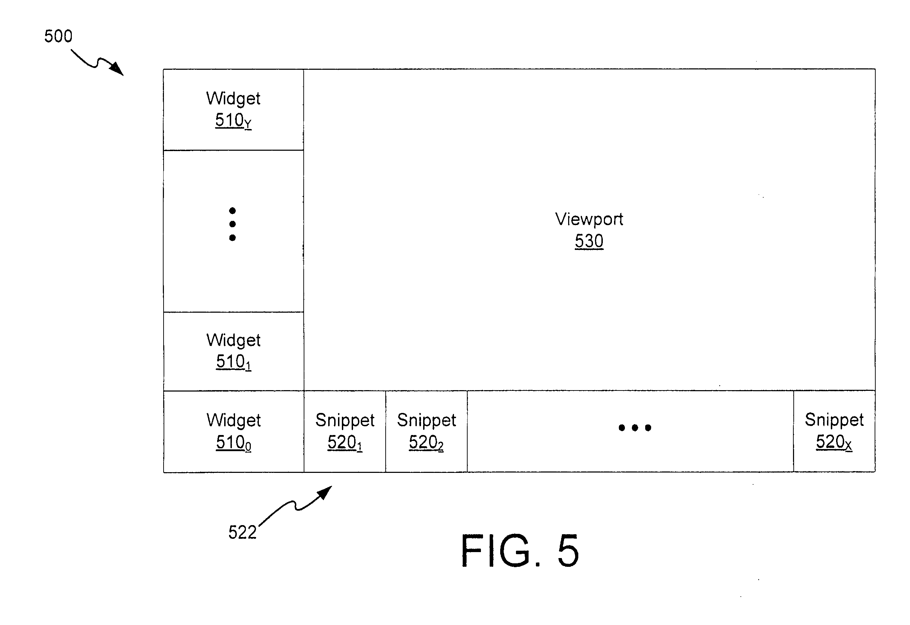

Referring now to FIG. 5, one embodiment of a user interface 500 for presenting a schedule 248 of activities to a viewer and for enabling a viewer to change the schedule 248 is shown. As shown, the user interface 500 includes a number of widgets 510₀, 510₁ ... 510₄, a number of snippets 520₁, 520₂ ... 520_{X}, and a viewport 530. Each of the widgets 510₀, 510₁ ... 510₄ corresponds to a schedule 248 having activities associated with the current date and time. Furthermore, each of the widget 510₀, 510₁ ... 510₄ may provide a brief textual description of the content of the associated schedule 510₀, 510₁ ... 510₄. The widget 510₀, 510₁ ... 510₄ may also provide a graphical image associated with the content of its schedule 248. For example, a schedule 248 may be created around a particular football game. The schedule 248 may include snippets 520 for a pre-game chat activity, a snippet 520 for a live broadcast of the football game, and a snippet 520 for a post-game chat activity. The schedule identifier 510 for the schedule 248 may include a textual label that identifies which teams are playing and may include graphical images depicting team logos, a football, etc.

In one embodiment, a viewer may select via the remote control 142 one of the widgets 510₀, 510₁ ... 510_{Y} in order to activate the associated schedule 248 and cause the CPT receiver 140 to initiate activities as specified by the selected schedule 248. Moreover, in one embodiment, the CPT receiver 140 may order and display the widgets 510₀, 510₁ ... 510_{Y} such that the widget 510 associated with the selected schedule 248 is displayed in the lower left position of the user interface 500. (See, 510₀ of FIG. 5)

As shown, several snippets 520₁, 520₂ ... 520_{X} may be displayed along a bottom portion of the user interface 500. In one embodiment, each snippet 520 corresponds to an activity of the selected schedule 248. In a manner similar to the widgets 510₀, 510₁ ... 510_{Y}, each of the snippets 520₁, 520₂ ... 520_{X} may provide a brief textual description of an associated activity. The snippets 520₁, 520₂ ... 520_{X} may also provide a graphical image associated with the activity. For example, a snippet 520 corresponding to a on-line gaming session may include a textual label that identifies the game to be played and may include graphical images depicting aspects of the game (e.g. a playing card for an online poker game).

The snippets 520₁, 520₂ ... 520_{X} graphically represent a time ordered queue 522 of activities which were specified by the selected schedule 248. In particular, the snippets toward the left of the user interface 500 (e.g. snippet 520₁) occur temporally prior to the snippets 520 toward the right of the user interface 500 (e.g. snippet 520_{X}). More specifically, in one embodiment, the activity currently being executed by the CPT receiver 140 is displayed in the viewport 530 whereas the activities to be performed as a result of executing the schedule 248 associated with schedule identifier 510₀ are depicted as snippets 520₁, 520₂ ... 520_{X} from left to right across the bottom of the user interface 500 in the temporal order specified by the schedule 248. For example, in one embodiment, the snippet 520₁ may be referred to as being "on-deck" and will be executed after the current activity displayed by the viewport 530 is completed. In response to completing the current activity, the CPT receiver 140 in one embodiment selects the next or "on-deck" snippet 520₁ in the queue 522, removes the selected snippet from the queue 522 and begins performing the activity identified by the selected snippet 522. Furthermore, as a result of removing the selected snippet from the queue 522, the CPT receiver shifts the remaining snippets in the queue 522 to the left. In other words, snippets 520₂ ... 520_{X+1} become snippets 520₁, 520₂... 520_{X} of FIG. 5.

In one embodiment, the user interface 500 of FIG. 5 further permits a viewer to alter the current schedule 248. In particular, the user interface 500 permits a viewer via the remote control 142 to move a snippet 520 toward the left in the queue 522 in order to cause the activity associated with the snippet to occur earlier, thus swapping the snippet 520 and its associated activity with an earlier snippet 520 and its activity in the queue 522. Likewise, the user interface 500 permits a viewer via the remote control 142 to move a snippet 520 toward the right of the queue 522 in order to cause the snippet to occur later, thus swapping the snippet 520 and its associated activity with a later snippet 520 in the queue 522.

Besides altering the order of snippets 520 in the queue 522, the user interface 500 may further permit a viewer to remove a snippet 520 from the queue 522 in order to prevent the CPT receiver 140 from executed the associated activity. Furthermore, the user interface 500 may permit a viewer to add a snippet 520 to the queue 522 in order to cause the CPT receiver to execute the associated activity. In particular, in one embodiment, the user interface 500 may enable a viewer to place a status indicator snippet 520 in the queue 522 in order to indicate the status of the viewer to a community of viewers using the schedule 248. For example, a viewer may enter a snippet 520 in queue 522 that states the viewer is putting children to bed between 9:00 P.M. and 9:15 P.M., thus informing others of the community that the viewer will be unavailable during that period.

As noted above, a programmer may define certain snippets 520 of schedule 248 as unmovable, undeletable, etc. To ensure that a live event is not moved or that marketing messages such as commercials, infomercials, etc. are not removed. Furthermore, in one embodiment, information regarding the current status of the queues 522 of a community of CPT receivers 140 may be received by the CPT server 130. Such data may be used to identify content of interest for the community of CPT receivers, and marketing opportunities. Such data may also be used to improve delivery of content. For example, popular content may be multicast at set times and schedules 248 created to limit delivery of such content at such set times in order to improve bandwidth usage.

While the disclosure has been illustrated and described in detail in the drawings and foregoing description, such an illustration and description is to be considered as merely illustrative and not restrictive in character, it being understood that only illustrative embodiments have been shown and described and that all changes and modifications that come within the spirit of the disclosure are desired to be protected.

## Claims

1. A method comprising:
creating a schedule for a plurality of activities that specifies a time of day at which to initiate each activity of the plurality of activities, and
transferring the schedule to a television receiver to cause the television receiver to initiate each activity at the time of day specified for the activity.

2. The method of claim 1, wherein at least one activity of the plurality of activities is selected from one of the following:
a television program;
a television program broadcast at a specified time; or
a social networking activity, especially, but not exclusively, a social networking activity selected from a group of social network activities comprising a chat activity, on-line gaming activity, a shopping activity, a media sharing activity, and an on-demand video activity.

3. The method of claim 1, wherein creating the schedule comprises selecting a snippet for each activity of the plurality of activities, each snippet comprising a plurality of instructions that in response to being executed by a television receiver.

4. The method of claim 1, further comprising receiving a request for the schedule from a television receiver device prior to transferring the schedule to the television receiver.

5. The method of claim 1, further comprising
adding the schedule to a gallery of schedules,
providing the gallery of schedules to the television receiver, and
receiving a request which selects the schedule from the gallery of schedules prior to transferring the schedule to the television receiver.

6. A television receiver, comprising:
a network interface to operably couple the television receiver to a network;
a video interface to operably couple the television receiver to a television;
storage to store instructions and a schedule that specifies a plurality of activities and a temporal order for the plurality of activities, and
a processor to execute the instructions, the processor in response to executing the instructions causes the television receiver to
obtain the schedule from a provider via the network interface, and
to execute the activities per the schedule obtained from the provider.

7. The television receiver of claim 6, further comprising a television interface to receive television programs, wherein the processor in response to executing the instructions further causes the television interface to receive a television program as specified by the schedule and causes the video interface to display the television program upon the television per the schedule.

8. The television receiver of claim 6, further comprising a remote interface to receive commands from a remote control, wherein the processor in response to executing the instructions further causes the television receiver to change the schedule per commands received from the remote control.

9. The television receiver of claim 8, wherein network interface further transmits data to a service provider that is indicative of changes made to the schedule.

10. The television receiver of claim 6, further comprising a remote interface to receive commands from a remote control, wherein the processor in response to executing the instructions further causes the television receiver to alter the temporal order of the plurality of activities per commands received from the remote control.

11. The television receiver of claim 6, further comprising a remote interface to receive commands from a remote control, wherein the processor in response to executing the instructions further causes the television receiver to change the schedule per commands received from the remote control if such changes comply with restrictions specified by the schedule.

12. A machine readable medium comprising a plurality of stored instructions that in response to being executed result in a television receiver,
receiving a schedule that specifies a plurality of activities and a time at which to initiate a first activity of the plurality of activities, and
executing the schedule by initiating the first activity of the plurality of activities at the specified time_

13. The machine readable medium of claim 12 wherein the plurality of stored instructions further result in the television receiver;
altering the schedule per commands received from a remote control; and
initiating activities of the plurality of activities per the altered schedule.

14. The machine readable medium of claim 13 wherein the plurality of stored instructions further result in the television receiver, transmitting data to a service provider that is indicate of the altered schedule.

15. The machine readable medium of claim 12 wherein the plurality of stored instructions further result in the television receiver,
displaying a queue depicting an order in which the plurality of activities are to be executed,
permitting a viewer to alter the order in which the plurality of activities are to be executed, and
displaying the queue such that the queue depicts the altered order in which the plurality of activities are to be executed.
